(19)

**Europäisches Patentamt**

**European Patent Office**

**Office européen des brevets**

(11) **EP 3 930 276 A1**

(12) **EUROPEAN PATENT APPLICATION**

(43) Date of publication:
**29.12.2021 Bulletin 2021/52**

(51) Int Cl.:
*H04L 27/26* (2006.01)

(21) Application number: **20181705.3**

(22) Date of filing: **23.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Commsolid GmbH**
**01099 Dresden (DE)**

(72) Inventors:
• **Schmidt, Michael**
**01324 Dresden (DE)**
• **Bury, Andreas**
**01099 Dresden (DE)**
• **Seifert, Tobias**
**01099 Dresden (DE)**

(74) Representative: **Lippert Stachow Patentanwälte Rechtsanwälte Partnerschaft mbB Krenkelstraße 3 01309 Dresden (DE)**

(54) **METHOD FOR A JOINT TIME-FREQUENCY SYNCHRONIZATION OF USER EQUIPMENT IN NB-IOT NETWORKS**

(57) The invention discloses a method for a joint time-frequency synchronization of User Equipment in NB-IoT Networks already connected to a serving cell obtaining an optimal time-frequency offset estimation. The objective to provide a procedure that permits optimized time-frequency synchronization of a UE, whereby quantities already known to the UE are used to operate the UE power efficiently and with a better performance will be solved by a method comprising the following stages:
- demodulating a received NB-IoT subframe $R_m$ with regard to a pre-computed reference NB-IoT subframe $B_m$ derived from information of the serving cell, and storing $W_m$ in matrix W;
- computing a metric $V_m(f,t)$ and recursively combining it with $W_m$, resulting in a new metric $U_m(f,t)$;
- recursively computing a reference value $S_m$ over $W_m$;
- comparing the metric $U_m(f,t)$ with the $S_m$, whereas
- if a normalized value of $U_m(f,t)/S_m$ does not exceed a threshold $K_{thres}(m)$, stages 1 to 5 of the method are recursively repeated up to a maximum number $M_{max}$ have been demodulated, otherwise
- if the normalized value of $U_m(f,t)/S_m$ exceeds the threshold $K_{thres}(m)$, arg-max values with regard to the discrete frequency offset values f ∈F and the discrete time offset values t ∈T are computed based on the values of $U_m(f,t)$ obtaining an optimal value of the time-frequency offset estimate.

Fig. 1

EP 3 930 276 A1

**Description**

The invention relates to a method for a joint time-frequency synchronization of User Equipment in NB-IoT Networks already connected to a serving cell obtaining an optimal time-frequency offset estimation.

Narrowband Internet-of-Things (NB-IoT) is a LTE based communication standard of 3GPP (see: 3GPP. Physical channels and modulation. TS 36.211 V15.6.0, July 2019.), targeting cellular based IoT communication with low power consumption, low device costs and extended range of the radio link. Similar to the baseline LTE standard, specific synchronization sequences as well as reference symbols are part of the 3GPP specification for NB-IoT. For NB-IoT UEs, it is very important to sustain the time-frequency synchronization after sleep or longer transmission periods. A straightforward but slow implementation for NB-IoT is to perform a cell search from scratch as for instance shown in R1-161981 NB-PSS and NB-SSS Design.doc http://www.3gpp.org/ftp/TSG_RAN/WG1_RL1/TSGR1_AH/LTE_NB-IoT_1603/Docs/R1-161981.zip.

For NB-IoT different physical signals and channels in the downlink are provided by the standard, e. g. Narrowband Primary Synchronization Signal (NPSS), Narrowband Secondary Synchronization Signal (NSSS) and Narrowband Physical Broadcast Channel (NPBCH). These NB-IoT physical channels and signals are primarily multiplexed in time. Generally, a radio signal which is transmitted from a base station to a UE, is hierarchically structured into subframes of duration one millisecond, 10 subframes forming a frame, 1024 frames forming a hyper frame, and 1024 hyper frames being the ambiguity period after which such pattern repeats, i. e., every 2 hours and 55 minutes. Furthermore, each NB-IoT subframe spans over one physical resource block (PRB) (i.e. 12 subcarriers) in the frequency domain.

Synchronization sequences as well as reference symbols can be used for time and frequency offset estimation. The way how synchronization is accomplished depends on the state with regard to the attachment to the network. In case of initial cell search nothing is known about subframe timing and the frequency offset. During an initial cell search the user equipment (UE) must usually perform several synchronization tasks in a consecutive manner as described next.

For a first synchronization between a UE and a base station in frame and subframe and in order to determine the cell ID the UE uses the narrowband primary synchronization signal (NPSS) and the narrowband secondary synchronization signal (NSSS), where NPSS provides initial time-frequency synchronization and NSSS yields cell-ID and frame timing. In a next step the UE receives the narrowband physical broadcast channel (NPBCH) and the system information block 1 (SIB1), before initiating a first transmission from UE to base station via the narrowband physical random-access channel (NPRACH).

If, however, the UE is already attached to the network at a certain serving cell, subframe scheduling is known and the frequency offset has already been compensated. In this case, the UE needs to keep track of time and frequency offset due to drifts, in order to provide reliable detection of the physical downlink channels.

A particular problem related to NB-IoT downlink synchronization is the fact, that update of the time-frequency estimation can be challenging if very low power consumption is targeted. Because performing time-frequency re-synchronization based on an initial cell search may require a relative long active reception (RX) on time, which is in particular undesirable for battery powered devices.

During connected mode, the use of Narrowband Reference Symbols (NRS) may be sufficient in order to sustain reliable synchronization estimates while decoding data from the physical downlink channels NPDCCH (Narrowband Physical downlink control channel) and NPDSCH (Narrowband Physical downlink shared channel). If, however, the UE monitors paging during idle mode, long sleep periods are essential for reduced power consumption. For very long sleep periods (Extended Discontinuous Reception (eDRX), Power Save Mode (PSM)) the UE can in principle start synchronization always from scratch with an initial cell search after wakeup. For shorter sleep periods, however, NRS based re-synchronization after wakeup may not work, since the catch range of the time and frequency deviation is too small. On the other hand, synchronization from scratch based on initial cell search may take too long as mentioned above. So in some use-cases, a more optimized re-synchronization method between the two extremes is beneficial.

Another use-case for re-synchronization is related to some NB-IoT specific aspects of uplink transmission. User equipment (UEs) of NB-IoT are required to support half-duplex operation only, hence there is no obvious way to track the synchronization parameters during a long transmission. In order to provide a means for synchronization during transmission, 3GPP introduces uplink (UL) transmission gaps of 40 ms after a transmission period of 256 ms. During this relative short duration of the uplink (UL) transmission gap an efficient method for synchronization is required, especially since this must be accomplished at relative low SNR less than -10dB.

The synchronization sequences NPSS (Narrowband Primary Synchronization Signal) and NSSS Narrowband Secondary Synchronization Signal) are transmitted in certain subframes. In contrast to the relative sparse occurrence of NRS distributed over several subframes, both NPSS and NSSS occupy many resource elements within the subframe interval.

For instance, the NPSS contains 121 resource elements at subframe #5 while a subframe containing NRS may contain up to 16 resource elements only. Hence, NPSS and NSSS are more useful if re-synchronization needs to be performed apart from normal receive operation at connected mode.

In theory, NPSS is transmitted in subframe #5 in every 10 ms frame, using the last 11 OFDM symbols in the subframe. NPSS detection is one of the most computationally demanding operations from a UE perspective. To allow efficient implementation of NPSS detection, NB-IoT uses hierarchical sequence. For each of the 11 NPSS OFDM symbols in a subframe, either $p$ or -$p$ is transmitted, where $p$ is the base sequence generated based on a length-11 Zadoff-Chu (ZC) sequence with root index 5. Each of the length-11 ZC sequence is mapped to the lowest 11 subcarriers within the NB-IoT PRB.

NSSS has 20 ms periodicity and is transmitted in subframe #9, also using the last 11 OFDM symbols that consist of 132 resource elements overall. NSSS is a length-132 frequency-domain sequence, with each element mapped to a resource element. NSSS is generated by element-wise multiplication between a ZC sequence and a binary scrambling sequence. The root of the ZC sequence and binary scrambling sequence are determined by narrowband physical cell identity (NB-PCID). The cyclic shift of the ZC sequence is further determined by the frame number.

NPBCH carries the master information block (MIB) and is transmitted in subframe #0 in every frame. A MIB remains unchanged over the 640 ms transmission time interval (TTI).

With release 15 of the NB-IoT standard (see: 3GPP. Physical channels and modulation. TS 36.211 V15.6.0, July 2019.), further power reduction during paging monitoring at idle mode can be obtained by means of a specific Narrowband Wakup Signal (NWUS). This signal is associated to certain paging occasions. In case the NWUS is present, time-frequency offset estimation can be directly obtained from the signal sequences of NWUS.

Time-frequency offset estimation using NPSS and NSSS is usually based on a boot strap approach, see e. g. (Qualcomm Incorporated. NB-PSS and NB-SSS Design. R1-161981, March 2016). First, the presence of a NPSS is detected along with a coarse estimate of the time and the frequency offset. Additional detection of the NSSS provides information of the cell identity and the frame structure. It can be also used for fine frequency offset estimation. Such a boot-strap approach is sub-optimal if the cell ID is already known along with its subframe scheduling.

It is therefore an objective of the present invention to provide a procedure that permits optimized time-frequency synchronization of a UE, whereby quantities already known to the UE are used to operate the UE power efficiently and with a better performance.

The objective of the invention will be solved by a method for a joint time-frequency synchronization of User Equipment (UE) in NB-IoT Networks already connected to a serving cell obtaining an optimal time-frequency offset estimation, the method comprising the following stages:

- demodulating a received NB-IoT subframe $R_m$ containing resource elements in the frequency domain with regard to a pre-computed reference NB-IoT subframe $B_m$ containing expected resource elements in the frequency domain, whereas the pre-computed resource elements of $B_m$ are derived from information of the serving cell, and storing resource elements of the demodulated NB-IoT subframe $W_m$ in matrix $W$, with $m$ being a natural number equal or greater than 0 and presenting the $m$-th processed subframe (stage 1) ;
- computing a metric $V_m(f,t)$ with regard to a region of pre-defined discrete frequency offset values $f \in F$ and discrete time offset values $t \in T$ (stage 2);
- recursively combining the metric $V_m(f,t)$ in a non-coherent way over multiple demodulated NB-IoT subframes $W_m$ resulting in a new metric $U_m(f,t)$ (stage 3);
- recursively computing a reference value $S_m$ over multiple demodulated NB-IoT subframes $W_m$, based on a subframe energy of the presently processed demodulated NB-IoT subframe $W_m$ (stage 4);
- comparing the non-coherently combined new metric $U_m(f,t)$ with the reference value $S_m$ (stage 5), whereas
- if a metric value of $U_m(f,t)$ does not exceed a threshold $K_{Threshold}(m)$, stages 1 to 5 of the method are recursively repeated up to a pre-defined maximum number of subframes $M_{max}$ have been demodulated with $M_{max}$ being a natural number greater than 0, otherwise
- if a metric value of $U_m(f,t)$ exceeds the threshold $K_{Threshold}(m)$, arg-max values with regard to the discrete frequency offset values $f \in F$ and the discrete time offset values $t \in T$ are computed based on the non-coherently combined metric values of $U_m(f,t)$ obtaining an optimal value of the time-frequency offset estimate, provided the number of combined subframes $W_m$ has not exceeded $M_{max}$ (stage 6) .

The key idea of the inventive method is to demodulate a received NB-IoT subframe with regard to all the resource elements of the expected (ideal) subframe. Let the ideal subframe be defined by the matrix $B = (b_{k,l})$ $k = 0,1,...,N_c - 1$, $l = 0,1,...,N_s - 1$ denoting the $(k,l)$ expected resource elements over the $N_c = 12$ carriers and $N_s = 14$ OFDM symbols per subframe.

If $R$ is the matrix corresponding to the resource elements of the received subframe (in the frequency domain), then let the matrix $W$ be defined as

$$W = \left( w_{k,l} = r_{k,l} \cdot b_{k,l}^* \right), \quad k = 0,1,...,N_c - 1, \quad l = 0,1,...,N_s - 1, \quad (1)$$

which denotes the demodulated subframe. In the absence of any receiver impairments due to noise and frequency selectivity and assuming perfect synchronization with regard to time and frequency offset

$$w_{k,l} = w_0 \exp(j\alpha), \quad k = 0,1,\ldots,N_c - 1, \quad l = 0,1,\ldots,N_s - 1,$$

for some real scalar $w_0$ and some angle $\alpha$. Hence, all complex valued elements of $W$ point to the same direction.

In case of a frequency offset $f_o$ in units of Hz,

$$w_{k,l}(f_0) = w_0 \exp(j\alpha) \cdot p_l(f_0), \quad k = 0,1,\ldots,N_c - 1, \quad l = 0,1,\ldots,N_s - 1$$

with $$p_l(f_0) = \exp(2\pi j \tau_l f_0) \qquad (2)$$

where $\tau_1$ is the time offset of the start of the $l$-th OFDM symbol within a subframe. The start $\tau_1$ of the $l$-th OFDM symbol is defined as the time right after its corresponding cyclic prefix.

In case of a time offset $t_o$, the equation (2) changes to

$$w_{k,l}(t_0) = w_0 \exp(j\alpha) \cdot q_k(t_0), \quad k = 0,1,\ldots,N_c - 1, \quad l = 0,1,\ldots,N_s - 1$$

With $$q_k(t_0) = \exp\left(2\pi j t_0 \left(k - \frac{N_c - 1}{2}\right)\Delta f_s\right) \qquad (3)$$

where $\Delta f_s$ = 15kHz is the frequency spacing of the OFDM carriers. If both, a frequency offset and a timing offset applies,

$$w_{k,l}(f_0,t_0) = w_0 \exp(j\alpha) \cdot p_l(f_0) \cdot q_k(t_0) \qquad (4)$$

Now, let $W = (w_{k,l})$ be the demodulated subframe according to equation (1) with unknown time and frequency offset. Let $V$ define the metric

$$V(f,t) = \left|\sum_{k=0}^{N_c-1} \sum_{l=0}^{N_s-1} w_{k,l} \cdot p_l(-f) \cdot q_k(-t)\right|^2 \qquad (5)$$

Hence, if $R = B + N$ with $N$ being a noise matrix where all elements are zero mean white Gaussian noise of equal variance, then $(\hat{f},\hat{t}) = arg\text{-}max_{f\in F, t\in T}V(f,t)$ are the optimal estimates of frequency and time with regard to a certain frequency offset region $F$ and a time offset region $T$. From a practical point of view, the sets $T$ and $F$ can be discrete with some useful resolution.

For instance, the set $F$ can be defined as

$$F = \{-N_F\Delta F, (-N_F + 1)\Delta F, \ldots, -\Delta F, 0, \Delta F, \ldots, (N_F - 1)\Delta F, N_F\Delta F\}.$$

Hence, $F$ is the set of $2N_F + 1$ frequency steps with a frequency resolution of $\Delta F$.

Similarly, $T = \{-N_{FT}\Delta T, (-N_T + 1)\Delta T, \ldots, -\Delta T, 0, \Delta T, (N_T - 1)\Delta T, N_T\Delta T\}$ is the set of $2N_T + 1$ time offsets steps with a time offset resolution of $\Delta T$.

In a next stage (stage 3) a new metric

$$U_m(f,t) = U_{m-1}(f,t) + V_m(f,t), \quad m = 0,1,\ldots,M - 1 \qquad (6)$$

is calculated by combining the metric $V_m(f,t)$ in a non-coherent way over multiple demodulated NB-IoT subframes $W_m$, where $V_m(f,t)$ is the metric according to equation (5) of the $m$-th subframe and $U_{-1}(f,t)=0$. Hence, the optimal values can be obtained by $(\hat{f},\hat{t}) = arg\text{-}max_{f\in F, t\in T}U_{M-1}(f,t)$. The advantage of this third stage is that for a very low signal to noise ratio, observation of a single subframe may still lead to large estimation errors, which can be reduced by combining multiple subframes. The approach of this invention is to non-coherently combine the metric *V* as described above.

Instead of applying a summation over a pre-defined number of subframes $M \geq 1$, it is desirable to terminate the summation automatically, once a reliable estimate is available. In order to do this, one computes a reference value (stage 4)

$$S_m = S_{m-1} + E_m, \quad m = 0, 1, \ldots, M - 1 \qquad (7)$$

with $S_{-1} = 0$, where $E_m$ is defined as $E_m = \sum_{k=0}^{N_c - 1} \sum_{l=0}^{N_s - 1} |w_{k,l}|^2$.

In stage 5 the non-coherently combined new metric $U_m(f,t)$ is compared with the reference value $S_m$.

The summation can be stopped at subframe $0 \leq m_0 \leq M-1$ if

$$\frac{U_m(\hat{f}, \hat{t})}{S_{m_0}} > K_{Threshold} \ (m = m_0) \qquad (8)$$

where $K_{Threshold}(m)$ is a threshold and $(\hat{f}, \hat{t})$ = arg - $\max_{f \in F, t \in T} U_{m_0}(f,t)$ (stage 6), otherwise stages 1 to 5 of the method are recursively repeated up to a pre-defined maximum number of subframes $M_{max}$ have been demodulated with $M$ being a natural number greater than 0. The threshold $K_{Threshold}$ controls the targeted estimation error, the larger the threshold, the smaller the resulting estimation error.

In case condition (8) is never true for some pre-defined value $M = M_{max}$, no reliable estimate can be found. Note that threshold $K_{Threshold}$ should (in general) be a function of *m*, since the threshold can relax with increasing number of *m*.

In a variant of the invention all complex exponentials with regard to the discrete frequency offset values $f \in F$ for all $N_s = 14$ OFDM symbols are pre-computed and stored in a look-up table.

And in a further variant of the inventive method, all complex exponentials with regard to the discrete time offset values $t \in T$ for all $N_c = 12$ OFDM symbols are pre-computed and stored in a look-up table.

It is a straightforward approach for the metric computation of equation (5) to transform elements $w_{k,1}$ to elements $\tilde{w}_{k,l} = \tilde{w}_{k,l(-f,-t)}$ according to equation (4) for each $f \in F$ and $t \in T$. Assuming values $p_1(-f)$ according to equation (2) are pre-computed for all $l \in 0,1,\ldots N_s - 1$ and all $f \in F$ and stored in a look-up table of size $N_s \times (2N_F + 1)$. Similarly, all values $q_k(-t)$ with regard to equation (3) are pre-computed for all carriers $k \in 0,1,\ldots N_c - 1$ and all $t \in T$ and stored in a look-up table of size $N_{sc} \times (2N_T + 1)$.

The overall computational complexity would be of the order $0(N_c \cdot N_s \cdot (2N_F + 1) \cdot (2N_T + 1))$.

In another variant of the inventive method and to reduce the computational complexity, the computation of the metric $V_m(f,t)$ is done in a two-stage approach, at which in a first stage intermediate values $c_k(f)$ are first computed based on the discrete frequency offset values $f \in F$ and in a second stage the metric values $V_m(f,t)$ are computed based on the intermediate values $c_k(f)$ of the first stage and based on the discrete values $t \in T$ and $f \in F$.

The intermediate values are computed by

$$c_k(f) = \sum_{l=0}^{N_s - 1} w_{k,l} \cdot p_l(-f) \qquad k = 0, 1, \ldots, N_c - 1, \quad f \epsilon F.$$

Based on the values $c_k(f)$, one can compute

$$V(f, t) = \left| \sum_{k=0}^{N_c - 1} c_k(f) \cdot q_k(-t) \right|^2, \ f \epsilon F, \ t \epsilon T.$$

The overall computational complexity is then of the order

$$O_1\big(N_c \cdot N_s \cdot (2N_F + 1)\big) + O_2\big(N_c \cdot (2N_F + 1) \cdot (2N_T + 1)\big).$$

The inventive method comprises for the demodulation of a particular NB-IoT subframe a pre-computation of a reference NB-IoT subframe $B_m$ containing expected resource elements in the frequency domain, whereas the pre-computed resource elements of $B_m$ are derived from information of the serving cell, with $m$ being a natural number equal or greater than 0 and presenting the $m$-th processed subframe. For the pre-computation the complex conjugate of the expected (ideal) resource elements, stored in matrix $B^*$ are necessary. This is more or less complex depending on the particular subframe, as outlined below.

So, in a variant of the inventive method, the Narrowband-Primary-Synchronization-Signal (NPSS) transmitted on subframe #5 of an anchor carrier is demodulated in stage 1, whereas the pre-computed reference NB-IoT subframe $B_m$ is constant regardless of the LTE frame number.

Demodulation of the NPSS is straightforward, since the matrix $B$ is constant regardless of the LTE frame number, which can be comprehended in http://www.3gpp.org/ftp/TSG_RAN/WG1_RL1/TSGR1_AH/LTE_NB-IoT_1603/Docs/R1-161981.zip, section 10.2.7.1., which is not repeated here for clarity issues. All elements of

$$B^* = \left( b^*_{k,l} \right)$$ can be pre-computed and stored in a look-up table. Demodulation is performed at subframe #5 of an anchor carrier.

In another variant of the inventive method, the Narrowband-Secondary-Synchronization-Signal (NSSS) transmitted on subframe #9 of an anchor carrier for every even LTE frame number is demodulated in stage 1, whereas the pre-computation of the reference NB-IoT subframe $B_m$ depends on the cell-ID.

For NSSS demodulation, matrix $B^*$ can be initially pre-computed according to http://www.3gpp.org/ftp/TSG_RAN/WG1_RL1/TSGR1_AH/LTE_NB-IoT_1603/Docs/R1-161981.zip, section 10.2.7.2 (not repeated here for clarity issues), depending on the cell-ID. Demodulation is performed at subframe #9 of an anchor carrier for every even valued LTE frame number. From a practical point of view, the roots of unity $G_k = \exp\left(\frac{2\pi jk}{131}\right)$, $k = 0,1,...,130$ can be pre-computed and stored in a look-up table, in order to obtain the values of the Zadoff-Chu sequence, see http://www.3gpp.org/ftp/TSG_RAN/WG1_RL1/TSGR1_AH/LTE_NB-IoT_1603/Docs/R1-161981.zip. The elements of the conjugate of the Zadoff-Chu sequence

$$z(k) = \exp\left( j\pi \frac{uk(k+1)}{131} \right), \quad k = 0,1,\ldots,130, \quad u \in \mathbb{Z}$$

can be simply read out by $z(k) = G_{y(k)}$ with index sequence $y(n) = (y(n-1) + u \cdot n) \bmod 131$, $y(0) = 0$, $n = 1,2,...,130$.

In addition, $\pi/2$-rotation of resource elements (depending on the LTE frame number) is required. Hence the pre-computation of $B^*$ is relative simple.

Besides subframes that are carrying synchronization signals, those subframes carrying broadcast data like master information Block (MIB) can be exploited for synchronization as well.

Hence, in another further variant of the inventive method, the master information Block (MIB) payload information which is delivered in the Narrowband-Physical-Broadcast-Channel (NPBCH) is used to demodulate NPBCH in stage 1, whereas the pre-computation of the reference NB-IoT subframe $B_m$ is performed at the beginning of the synchronization procedure and depends on the re-encoding of the resource elements of the NPBCH.

In NB-IoT, MIB is delivered in NPBCH, which uses the first subframe of each system frame. MIB payload is usually static and known to the UE from the very first cell search, which is why it can be used as known reference data to demodulate NPBCH. For this purpose, MIB payload needs to be re-modulated, following the steps described in http://www.3gpp.org/ftp/TSG_RAN/WG1_RL1/TSGR1_AH/LTE_NB-IoT_1603/Docs/R1-161981.zip, section 10.2.4 (not repeated here for clarity issues). This comprises bitstream encoding, rate matching, scrambling, and QPSK modulation. The conjugated QPSK symbols are mapped to the resource elements of the NPBCH subframe, representing the matrix $B^*$. MIB is spread over eight subframes, leading to eight different matrices, where the right one is selected according to the current frame timing. The pre-computation of the $B^*$ has to be performed at the beginning of the synchronization procedure. Since the upper 4 bits of the frame timing are part of the MIB payload, a re-computation of $B^*$ at frame boundaries SFN % 64 = 0 is required.

NB-IoT supports space-frequency block coding, i. e. the broadcast channel (as well as physical downlink channels) might be transmitted by two concurrent signals that superimpose on the receiver side. The symbol mapping to both transmit antennas follows the Alamouti scheme, whose orthogonality property allows demodulation at low complexity. Regarding synchronization in a two-transmit antenna system, NPBCH can hence be demodulated both with respect to the first transmit antenna and with respect to the second transmit antenna, resulting in two demodulation results.

In a further variant of the inventive method, the Narrowband-Wakeup-Signal (NWUS) is demodulated in stage 1, whereas the pre-computation of the reference NB-IoT subframe $B_m$ depends on the cell-ID and the time of the paging occasion to which NWUS is associated.

For NWUS demodulation, matrix $B^*$ can be pre-computed according to http://www.3gpp.org/ftp/TSG_RAN/WG1_RL1/TSGR1_AH/LTE_NB-IoT_1603/Docs/R1-161981.zip, section 10.2.6B (not repeated here for clarity issues), depending on the cell-ID and the time of the paging occasion to which NWUS is associated. The Zadoff-Chu sequence is equivalent to the one of the NSSS. In addition, $\pi/2$-rotation of resource elements (depending on a scrambler state) is required. For a subframe in which SystemInformationBlockType1-NB (SIB-1) is transmitted or a subframe in which an System Information (SI) message is transmitted, the integration according to equations (6) and (7) should be ommited, since no NWUS signal is transmitted at those subframes. The reliability check of equation (8) can be used for detection of the presence or absence of the NWUS.

The invention will be explained in more detail using an exemplary embodiment.

The appended drawing shows

Fig. Example of the computed metrics $V_m(f,t)$ summarized in a function $V(f,t)$ for $f_0$ = -400Hz and $t_0$ = 2.5$\mu s$.

The figure shows an example of the two-dimensional function $V$, with frequency offset $f_0$ =400Hz and time offset $t_0$ = 2500ns. In this case, the resolution for frequency offset was set to $\Delta F$ = 80Hz with $N_F$ = 15. So the catch range with regard to frequency deviation is approx. $\pm 1.2$kHz. The time resolution was set to $\Delta T$ = 790ns with $N_T$ = 10 supporting a catch range of approx. $\pm 7.9\mu s$. For demodulation, the NSSS was used without additive noise. The optimal estimation values with regard to the maximum of $V(f,t)$ are $\hat{f}$ =400Hz and $\hat{t}$ = 2370ns.

Summarizing, an optimal joint time-frequency offset estimate in case the serving cell is already known and other information can be derived from the knowledge of the serving cell is disclosed. In particular, the time-frequency estimation is based on the demodulation of a complete received NB-IoT subframe with respect to all the resource elements of the expected (ideal) content of the subframe. This re-synchronization can be based on the sequences NPSS and NSSS but also on the NPBCH. For paging with NWUS signaling, detection and re-synchronization can be based on the NWUS.

The inventive procedure provides optimized time-frequency synchronization of a UE, whereby the UE can operate more power efficiently and with a better performance. The inventive method is running on the NB-IoT modem of the UE side.

**Claims**

1. A method for a joint time-frequency synchronization of User Equipment, UE, in NB-IoT Networks already connected to a serving cell obtaining an optimal time-frequency offset estimation, the method comprising the following stages:

   - (stage 1) demodulating a received NB-IoT subframe $R_m$ containing resource elements in the frequency domain with regard to a pre-computed reference NB-IoT subframe $B_m$ containing expected resource elements in the frequency domain, whereas the pre-computed resource elements of $B_m$ are derived from information of the serving cell, and storing resource elements of the demodulated NB-IoT subframe $W_m$ in matrix $W$, with m being a natural number equal or greater than 0 and presenting the m-th processed subframe,
   - (stage 2) computing a metric $V_m(f,t)$ with regard to a region of pre-defined discrete frequency offset values $f \in F$ and discrete time offset values $t \in T$,
   - (stage 3) recursively combining the metric $V_m(f,t)$ in a non-coherent way over multiple demodulated NB-IoT subframes $W_m$ resulting in a new metric $U_m(f,t)$,
   - (stage 4) recursively computing a reference value $S_m$ over multiple demodulated NB-IoT subframes $W_m$, based on a subframe energy of the presently processed demodulated NB-IoT subframe $W_m$,
   - (stage 5) comparing the non-coherently combined new metric $U_m(f,t)$ with the reference value $S_m$, whereas
   - if a normalized metric value of $U_m(f,t)/S_m$ does not exceed a threshold $K_{Threshold}$ (m), stages 1 to 5 of the method are recursively repeated up to a pre-defined maximum number of subframes $M_{max}$ have been demodulated with $M_{max}$ being a natural number greater than 0, otherwise
   - (stage 6) if the normalized metric value of $U_m(f,t)/S_m$ exceeds the threshold $K_{Threshold}$ (m), arg-max values with regard to the discrete frequency offset values $f \in F$ and the discrete time offset values $t \in T$ are computed based on the non-coherently combined metric values of $U_m(f,t)$ obtaining an optimal value of the time-frequency offset estimate, provided the number of combined subframes $W_m$ has not exceeded $M_{max}$.

2. The method for a joint time-frequency synchronization of UE according to claim 1, wherein all complex exponentials with regard to the discrete frequency offset values $f \in F$ for all $N_S$ = 14 OFDM symbols are pre-computed and stored in a look-up table.

3. The method for a joint time-frequency synchronization of UE according to claim 1, wherein all complex exponentials with regard to the discrete time offset values $t \in T$ for all $N_c$ = 12 OFDM symbols are pre-computed and stored in a look-up table.

4. The method for a joint time-frequency synchronization of UE according to claim 1, wherein the computation of the metric $V_m(f,t)$ is done in a two-stage approach, at which in a first stage intermediate values $c_k(f)$ are first computed based on the discrete frequency offset values $f \in F$ and in a second stage the metric values $V_m(f,t)$ are computed based on the intermediate values $c_k(f)$ of the first stage and based on the discrete values $t \in T$ and $f \in F$.

5. The method for a joint time-frequency synchronization of UE according to claim 1, wherein the Narrowband-Primary-synchronization-Signal transmitted on subframe #5 of an anchor carrier is demodulated in stage 1, whereas the pre-computed reference NB-IoT subframe $B_m$ is constant regardless of the LTE frame number.

6. The method for a joint time-frequency synchronization of UE according to claim 1, wherein the Narrowband-Secondary-Synchronization-Signal transmitted on subframe 9 of an anchor carrier for every even LTE frame number is demodulated in stage 1, whereas the pre-computation of the reference NB-IoT subframe $B_m$ depends on the cell-ID.

7. The method for a joint time-frequency synchronization of UE according to claim 1, wherein the master information Bit, MIB, payload information which is delivered in the Narrowband-Physical-Broadcast-Channel, NPBCH, is demodulated in stage 1, whereas the pre-computation of the reference NB-IoT subframe $B_m$ is performed at the beginning of the synchronization procedure and depends on the re-encoding of the resource elements of the NPBCH.

8. The method for a joint time-frequency synchronization of UE according to claim 1, wherein the Narrowband-Wakeup-Signal, NWUS, is demodulated in stage 1, whereas the pre-computation of the reference NB-IoT subframe $B_m$ depends on the cell-ID and the time of the paging occasion to which NWUS is associated.

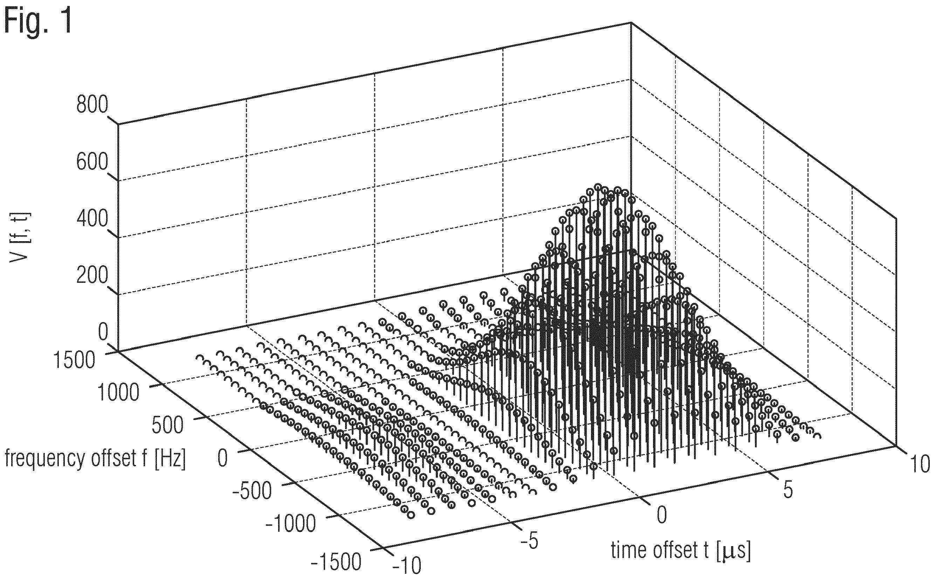

Fig. 1

EP 3 930 276 A1

Europäisches
Patentamt

European
Patent Office

Office européen
des brevets

**EUROPEAN SEARCH REPORT**

Application Number

EP 20 18 1705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEDIATEK INC: "On design aspects for NB-IoT Wake Up Signal", 3GPP DRAFT; R1-1719591-ON DESIGN ASPECTS FOR NB-IOT WUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevado, USA; 20171127 - 20171201 18 November 2017 (2017-11-18), XP051369405, Retrieved from the Internet: URL:http://www.3gpp.org/ftp/tsg%5Fran/WG1%5FRL1/TSGR1%5F91/Docs/ [retrieved on 2017-11-18] * paragraph [0002] * ----- | 1-8 | INV. H04L27/26 |
| A | MEDIATEK INC: "Performance Analysis of PSS in Initial Time-Frequency Uncertainty", 3GPP DRAFT; R1-1612128_PSS_ANALYSIS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176083, Retrieved from the Internet: URL:http://www.3gpp.org/ftp/Meetings_3GPP_SYNC/RAN1/Docs/ [retrieved on 2016-11-13] * paragraph [0001] - paragraph [0003] * ----- -/-- | 1-8 | TECHNICAL FIELDS SEARCHED (IPC) H04L |

The present search report has been drawn up for all claims

| Place of search | Date of completion of the search | Examiner |
|---|---|---|
| Berlin | 24 November 2020 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 18 1705

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| A | US 2017/264406 A1 (LEI JING [US] ET AL) 14 September 2017 (2017-09-14) * paragraph [0066] - paragraph [0067] * ----- | 1-8 | |
| A | US 2020/053673 A1 (REIAL ANDRES [SE] ET AL) 13 February 2020 (2020-02-13) * paragraph [0068] * ----- | 1-8 | |
| | | | TECHNICAL FIELDS SEARCHED      (IPC) |

The present search report has been drawn up for all claims

| Place of search | Date of completion of the search | Examiner |
|---|---|---|
| Berlin | 24 November 2020 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 18 1705

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2020

| Patent document cited in search report | | | Publication date | Patent family member(s) | | | Publication date |
|---|---|---|---|---|---|---|---|
| US 2017264406 | A1 | | 14-09-2017 | AU | 2017228738 | A1 | 23-08-2018 |
| | | | | BR | 112018068292 | A2 | 15-01-2019 |
| | | | | CA | 3013918 | A1 | 14-09-2017 |
| | | | | CL | 2018002560 | A1 | 21-12-2018 |
| | | | | CN | 108713335 | A | 26-10-2018 |
| | | | | CO | 2018009402 | A2 | 20-09-2018 |
| | | | | EP | 3427524 | A1 | 16-01-2019 |
| | | | | IL | 260834 | A | 31-08-2020 |
| | | | | JP | 6640371 | B2 | 05-02-2020 |
| | | | | JP | 2019510413 | A | 11-04-2019 |
| | | | | JP | 2020074528 | A | 14-05-2020 |
| | | | | KR | 20180123495 | A | 16-11-2018 |
| | | | | NZ | 744874 | A | 25-09-2020 |
| | | | | PH | 12018501632 | A1 | 27-05-2019 |
| | | | | SG | 11201806443R | A | 27-09-2018 |
| | | | | US | 2017264406 | A1 | 14-09-2017 |
| | | | | WO | 2017155601 | A1 | 14-09-2017 |
| | | | | ZA | 201806055 | B | 26-02-2020 |
| US 2020053673 | A1 | | 13-02-2020 | CN | 110603795 | A | 20-12-2019 |
| | | | | EP | 3622683 | A1 | 18-03-2020 |
| | | | | US | 2020053673 | A1 | 13-02-2020 |
| | | | | WO | 2018206666 | A1 | 15-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *TS 36.211 V15.6.0,* July 2019